# EUROPEAN PATENT SPECIFICATION

(11) **EP 1 504 572 B1**
(45) Date of publication and mention of the grant of the patent: **05.07.2006**
(21) Application number: 02730564.8
(22) Date of filing: 15.05.2002
(51) Int. Cl.: H04L 12/56, H04L 12/28

(54) **METHOD AND DEVICE FOR ESTABLISHING AN L2CAP CHANNEL DEDICATED FOR DATA FLOW TRANSMISSION IN BLUETOOTH NETWORKS**
VERFAHREN UND VORRICHTUNG ZUM HERSTELLEN EINES L2CAP-KANALS, DER FEST FÜR DIE DATENFLUSSÜBERTRAGUNG IN BLUETOOTH-NETZWERKEN ZUGEWIESEN IST
PROCEDE ET APPAREIL POUR L'ETABLISSEMENT D'UN CANAL L2CAP DEDIE A LA TRANSMISSION DE FLUX DE DONNEES DANS UN RESEAU BLUETOOTH

(43) Date of publication of application: 09.02.2005
(73) Proprietor: Nokia Corporation, 02150 Espoo (FI)
(72) Inventor: VAN VALKENBURG, Sander, FIN-00530 Helsinki (FI)
(74) Representative: Becker Kurig Straus
(86) International application number: PCT/IB2002/001656
(87) International publication number: WO 2003/098881

(56) References cited:
- EP-A2- 1 206 086
- WO-A1-01/63855
- WO-A1-02/23858
- US-A1- 2002 022 486
- US-A1- 2002 044 549
- 'Bluetooth network encapsulation protocol (BNEP) specification', [Online] 12 June 2001, pages 1 - 50, XP002958424 Retrieved from the Internet: <URL:http://www.bluetooth.org/docs/BNEP_0_9 5a.pdf> [retrieved on 2002-11-07]

## Description

The present invention relates generally to data transfer in networks. It also relates to wireless personal area networks (PAN). More specifically the invention relates to a simple method to optimize data transfer of data flows in a Bluetooth Network. Additional information about local area wireless networking can be downloaded from http://www.bluetooth.org.

Currently the IP (Internet Protocol) networking over Bluetooth is defined by the Bluetooth PAN profile. The PAN profile emulates an Ethernet interface to IP, through BNEP (Bluetooth Network Encapsulation Protocol). A BNEP connection is identified by a specific, fixed Protocol/Service Multiplexer (PSM) value (see http://www.bluetooth.org/assigned-numbers/12cap.htm). It is specified that there can be only one BNEP connection between two devices, which (currently) means that there can be only one L2CAP (Logical Link and Adaptation Protocol) connection with the reserved PSM value for BNEP. BNEP multiplexes all BNEP traffic (and thus IP traffic) over one logical (L2CAP) channel according to the logical link control and adaptation protocol (L2CAP). Bluetooth provides a quality of service (QoS) differentiation on top of L2CAP i.e. L2CAP channels can be configured with specific QoS parameters. Currently, prioritization of IP packets is possible within the PAN profile by using priority tags in BNEP packets according to the IEEE 802.1p specification (part of IEEE 802.1d specification). This allows relative prioritization of IP packets over one L2CAP connection for BNEP. Actually BNEP uses only one L2CAP channel between a pair of devices, therefore a differentiation of different IP flows over BNEP is currently not possible.

Quality of Service will receive another boost when Third Generation Partnership Project (3GPP) Release 5 compatible networks will include Internet Multimedia Subsystem (IMS). When a mobile terminal (MT) provides IMS connectivity to some terminal equipment (TE), such as a notebook or personal digital assistant (PDA), using Bluetooth, several IP connections may be multiplexed over the same Bluetooth link. In order to satisfy the QoS requirements of those IP connections for accessing multimedia services (such as provided by IMS), packets belonging to those IP connections have to be handled separately at lower Bluetooth layers as well. This way the specific latency and/or bandwidth requirements can be met, and they are differentiated from best-effort traffic such as web browsing, which may also occur over the same Bluetooth link. In addition to accessing multimedia applications through a cellular network, Bluetooth devices participating in ad-hoc networks may also host applications that require specific QoS handling.

A document related to the transfer of data via Bluetooth connections is the document US 2002044549 disclosing a method for efficient scatternet forming. This document relates to the selection of a transmission path through a scatternet formed by a number of piconets. This document teaches to set up dedicated scattemets fore the data communication between devices belonging to different piconets to reduce the number of hops in the data transfer path.

Presently, the PAN profile has a limitation to one L2CAP channel for the BNEP connection between a pair of PAN-enabled devices. This restricts the differentiation of data flows over a Bluetooth PAN connection and thus single baseband connection. It also restricts resource reservation for flows with conflicting QoS parameters.

Therefore it would be desirable to have a mechanism for mapping data flow-dependent QoS behavior to Bluetooth L2CAP channels through BNEP to enable resource reservation and/or prioritization for the data flow.

It is further desirable to improve the present Bluetooth (BNEP and L2CAP) protocols to allow and improve multiple baseband connections between a pair of Bluetooth devices.

According a first embodiment of the present invention a method for transferring data flows or signals via a Bluetooth connection between two devices according to the Bluetooth Network Encapsulation Protocol (BNEP) is provided. Said data flow is transferred in addition to other data flows on said BNEP connection. The method comprises the operation of detecting a data flow to be transferred, and is characterized by detecting and/or determining a quality of service requirement of said data flow, and establishing a (Logical Link Control and Adaptation) protocol (L2CAP) channel dedicated for said data flow which at least meets said determined quality of service requirement.

An aspect of the invention can be explained by the example of e. g. an IP flow. The main idea of this example is to set up a L2CAP channel for an IP flow when establishing the flow. This flow co-exists with other L2CAP channels, including the main BNEP connection. Within the Bluetooth PAN profile, IP traffic is mapped onto the BNEP connection. Therefore the additional L2CAP channels for specific IP flows are part of the BNEP connection between two devices. The presented invention also provides a framework for mapping IP-based QoS mechanisms to Bluetooth-specific QoS mechanisms.

The establishment of the data flow is signaled using BNEP control packets to indicate which flow belongs to the L2CAP channel, to indicate the source and destination of the flow within the Bluetooth domain, and to negotiate the QoS parameters for the L2CAP connection. The invention overcomes the current limitation of the PAN profile of having only one L2CAP channel for the BNEP connection between a pair of PAN-enabled devices. This restricts differentiation of IP flows over a Bluetooth PAN connection and thus single Baseband connection. It also restricts resource reservation for flows with conflicting QoS parameters.

The invention may be understood as the establishment of multiple different L2CAP connections between two Bluetooth devices to be able to provide a Quality of Service (QoS) dedicated to certain types of data flows. In difference to the present state of the art, wherein all data is time multiplexed via a single L2CAP channel, the multiple L2CAP connections between different devices are established to be able to offer different QoS parameters. So instead of offering a certain data transfer schedule on transferring different data flows over a single channel, for each data flow a single custom channel is established to be able to grant the QoS parameters for each data flow. It may be noted that the different data packets of all different channels are transferred via one and the same physical transceiver elements in the Bluetooth devices. It may be noted that the number of data flows and/or L2CAP channels is not restricted in principle, but the overall QoS may be restricted by the physical layer of the Bluetooth connection.

Further it may be noted that in the state of the art there has been no specific solution for setting up L2CAP channels for specific IP QoS flows through BNEP. Neither has the state of the art offered a specific solution for reserving resources at link layer for more than one flow other than aggregating the QoS parameters i.e. there has been no way to reserve and maintain link layer resources independently for independent flows.

It may further be noted that the connection between such devices or applications may happen over a single Bluetooth connection, or may require forwarding of data packets so that correct handling of the connection is necessary for multiple Bluetooth links in the end-to-end application connection.

In contrast to the present invention, the prioritization scheme of 802.1p does not offer a mechanism for setting up flow-specific channels, nor does it provide any anticipation of IP QoS flows (e.g. bandwidth reservation, specification of minimum delay requirements). Bluetooth offers resource allocation for L2CAP channels with specific QoS parameters, but currently a state of the art BNEP only allows for one L2CAP channel (for BNEP) between a pair of Bluetooth devices. The present invention offers the advantage of setting up dedicated L2CAP channels for specific IP flows or traffic classes, while still maintaining the concept of a BNEP connection by allowing control over the additional connections through BNEP. The invention also provides a framework for mapping IP-based QoS mechanisms to Bluetooth QoS mechanisms.

The presented invention introduces the possibility to establish additional L2CAP connections for specific IP flows. Each such L2CAP connection is identified by a dynamically assigned PSM value (which is within the range of 0x1001-0xFFFF). This L2CAP channel is tied to the specific flow, or flows, it is set up for. Packets belonging to this flow are identified by a higher layer flow or packet identifier (e.g. the IP flow label, source and destination addresses and port numbers, or the 802.1p priority tag). The L2CAP channel is configured with specific QoS parameters that meet the demand of the IP flow. The information for setting up this specific L2CAP channel is exchanged using BNEP signaling packets. This information consists of at least the dynamic PSM value, type and value of the identification of packets belonging to the flow, and the set of QoS parameters for the L2CAP channel. Also, said newly established L2CAP channel can be kept free of control packets. In addition BNEP keeps control over the establishment of L2CAP channels.

Preferably, a control signaling necessary for establishing said logical channel and necessary for the operating/maintaining of said logical channel is transferred via said Bluetooth network encapsulation protocol (BNEP) data connection. In contrast to simply generating an additional L2CAP channel for a detected data flow, which would correspond to just setting up a new L2CAP channel, or an additional Bluetooth connection, the control signaling for the new L2CAP is still transferred via said BNEP connection. Thereby said newly established L2CAP channel can be kept free of control packets. In addition BNEP keeps control over the establishment of L2CAP channels. Instead of offering a certain data transfer schedule on transferring different data flows over a single channel, for each data flow a single custom channel is established to be able to grant the QoS parameters for each data flow, wherein the "administrative" signaling traffic is transferred via the standard BNEP connection. This leads to a separation of said data flow from signaling traffic of the L2CAP channel dedicated for said data flow.

Advantageously, said control signaling further includes identifying of said data flow. The identification can include the basic information such as the address of said data flow, but can naturally include the identification of Protocol/Service Multiplexer (PSM) values of said IP flow, as a BNEP L2CAP connection is identified by a specific, fixed PSM value.

Preferably, said control signaling includes the transfer of quality of service parameters according to said quality of service requirements. This is just to emphasize that the control packets transferred via said BNEP connection also include said QoS parameters to be met by said L2CAP channel.

Advantageously, said method further comprises evaluating said required quality of service. It may be noted, that the QoS value of the data flow and the QoS value of the BNEP connection /L2CAP channel may be different as e.g. the data rates may be related to the packed data stream or to the net data rate. The QoS requirements may have to be converted to grant the required net QoS in each part of the transmission. The evaluation may even use additional information of e.g. adjacent transfer channels to provide e.g. a predetermined overall QoS for e.g. a multi-hop connection. A step of evaluating said required QoS value, can help to decide, if a dedicated L2CAP channel is required or not. So according to said evaluation a L2CAP channel is set up, or is allocated to other data traffic via the BNEP connection. The evaluation may include a monitoring of the data traffic of the BNEP connection to optimize the number of L2CAP channels used.

Preferably, said establishing of said L2CAP channel includes negotiating the quality of service between said two devices. As illustrative example of the presented invention, a BNEP connection between two Bluetooth devices exists, and one of the devices wishes to reserve link resources for a specific (IP) application for a single-hop (Bluetooth) connection.

The device dispatches the following data to the peer device:
- source and destination of the QoS flow (within the Bluetooth domain);
- proposed PSM value (from the range ofPSMs that can be dynamically assigned);
- higher layer flow identification [e.g. 802.1p or Diffserv traffic class (Differentiated Services), Intserv (Integrated Services) connection identifier (source and destination IP addresses and port numbers), IP Flow Label, etc.];
- L2CAP QoS parameters.

The signaling information is carried in a specific BNEP signaling packet or extension header. The peer device may reply with a confirmation of these parameters, or suggest alternative values (for the QoS parameters), or reject the request. If confirmed, a L2CAP channel is set up and configured using the negotiated QoS parameters, and subsequently all packets belonging to the QoS flow are sent over the newly established L2CAP channel. The packets are sent as normal BNEP packets conforming to the BNEP specification. Each packet sent over this L2CAP channel carries the identifier indicated in the signaling packet.

It may be noted that the negotiation of the QoS parameters can result in a L2CAP connection with higher or better QoS parameters than required, if e.g. the present data traffic between said two devices allows it. It may further be noted that the present invention can be combined with methods to optimize the data traffic in Bluetooth piconets or in scatternets, as all the QoS requirements are transferred via a single BNEP connection, so it is not necessary to determine the overall QoS requirements bit by bit.

In accordance with the invention, the method further comprises the transfer of said data flow via said dedicated L2CAP connection.

Advantageously, said data flow is an internet protocol (IP) data flow. In the case of multiple L2CAP channels between two Bluetooth devices, or even multiple Baseband connections between two Bluetooth devices, different L2CAP channels (and possibly Baseband connections) have different QoS parameters, depending of the QoS requirements of their respective data flows.

Preferably, data packets of said internet based data flow are mapped to said L2CAP channel based on the identifiers of said data packets. This enables an unambiguous mapping of the IP data packets to the L2CAP channel, simplifying the mapping of the data flow from IP to L2CAP. It may be noted that this can be operated vice versa to provide a fully fledged bi-directional data communication between said data flow and the L2CAP channel, e.g. between the internet and a piconet.

Advantageously, said QoS requirement is selected from a group comprising specific latency, delay, error rate, data rate, priority, packet length, payload length, packet order, and bandwidth. The specification of the QoS parameters and the QoS parameters itself depend on the characteristics of the data flow. The term "specific latency" describes a value of an average delay of packets. The delay describes a usually constant hold up of data packets during the transmission.

According to another embodiment of the present invention, said data flow is transferred via more than one single Bluetooth connection. The data flow can be transferred via more than one L2CAP channels for each BNEP connection. The data flow can be transferred via more than one Bluetooth device by means of indicating the source and the destination addresses (at BNEP level) of the flow. Thereby in scatternets a multihop connection over multiple Bluetooth devices can be established fulfilling said QoS requirements.

Another embodiment of the present invention provides a computer program tool comprising program code means for carrying out the method for transferring data flows between two Bluetooth devices connected via a BNEP data connection on dedicated L2CAP channels. The software tool comprises program code means for performing all the steps described in the preceding description when said program is run on a computer or a network device.

According to yet another embodiment of the invention, a computer program is provided. The computer program comprises program code means stored on a computer readable medium for carrying out the method for transferring data flows between two Bluetooth devices connected via a BNEP data connection. The execution of the program on a computer or a network device leads to establishing dedicated L2CAP channels dedicated to data flows, according to the preceding description.

According to yet another embodiment the invention a computer program product is provided that comprises program code means stored on a computer readable medium for carrying out the method for transferring data flows between two Bluetooth devices connected via a BNEP data connection of the preceding description when said program product is run on a computer or a network device.

According to another embodiment of the present invention, a network device for transferring at least one data flow or signal via a Bluetooth connection between two network devices is provided. The Bluetooth connection corresponds to the Bluetooth network encapsulation protocol (BNEP). The device comprises a component for detecting at least one data flow to be transferred, and is characterized by a component for detecting a quality of service (QoS) requirement of said at least one data flow, and a component for establishing a logical (L2CAP) channel dedicated for said data flow, said channel providing a logical link control and adaptation protocol, wherein said channel is meeting at least said detected quality of service (QoS) requirement. The device transfers said at least one data flow according to the method described in the preceding description, wherein for each data flow a dedicated L2CAP channel is used for the data transfer.

In the following, the invention will be described in detail by referring to the enclosed drawings in which:
Figure 1 is a flowchart of a conventional transmission of two different data flows from one Bluetooth device to another via a single L2CAP channel, and
Figure 2 is an example of a transmission of two different data flows from one Bluetooth device to another according to one aspect of the present invention,
Figure 3 is an example of a Bluetooth piconet multi-hop application according to an embodiment of the present invention,
Figure 4 is another example of a communication between a host in a network and a piconet user via a network access point according to another embodiment of the present invention, and
Figure 5 depicts a situation of a multi-hop Bluetooth connection to an internet host via a network access point.

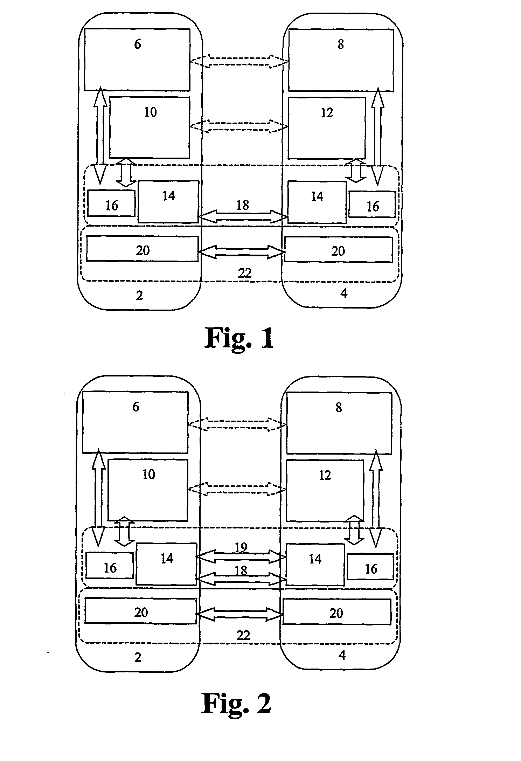

Figure 1 depicts a conventional data transfer from one Bluetooth device to another. In the picture there are the two Bluetooth enabled devices 2 and 4. The devices 2,4 are substantially similar and are running each two different applications 6,10 and 8, 12. In case of the standard data transmission the data flows of both applications 6,10 and 8,12 are transferred to the L2CAP layer with the substantially the same Link Manager Protocol (LMP) 16 and Logical Link Control and Adaptation Protocol (L2CAP) 14 units. The units transfer both data flows via the same logical L2CAP channel data link 18. The data packets are transferred via the same physical connection 22 via the same substantially similar baseband transceiving units 20. The conventional data transfer is basically three layered, wherein in the two bottom layers, there is only one logical link present.

Figure 2 depicts a data transfer from one Bluetooth device to another according to an embodiment of the present invention. As in the case of Fig. 1 there are the two Bluetooth enabled devices 2 and 4. The elements of both devices are substantially the same, with the difference that in the L2CAP layer with the LMP 16 and L2CAP 14 units, the date flows of the different applications are handled separately in two different L2CAP channels. The units transfer both data flows via different logical L2CAP channel data links 18 and 19, wherein each of said channels is dedicated to one of said data flows. As in the case of Fig. 1, the data packets can be transferred via the same physical connection 22, via the same substantially similar baseband transceiving units 20. The inventive data transfer is basically three layered, wherein in the L2CAP layer there are at least two different logical links present.

It is to be noted that the examples of Figs. 1 and 2 show two distinct data flows, the invention can also be applied to a single data flow wherein the BNEP connection utilizes a single L2CAP channel, and establishes an extra L2CAP channel for each detected data flow to be transferred.

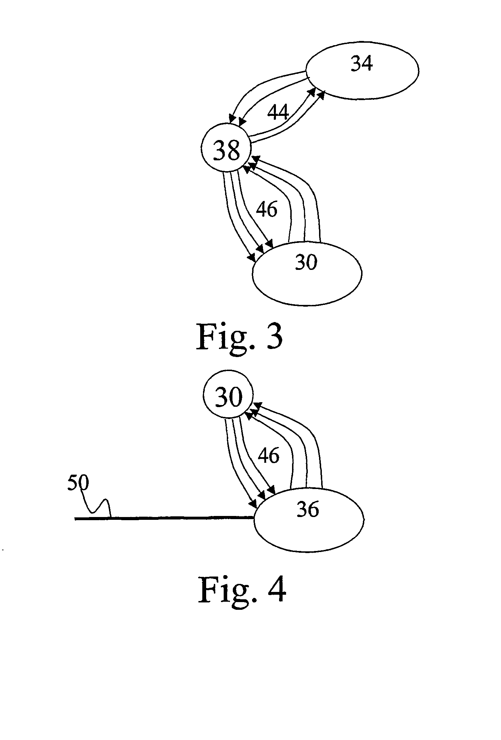

Figure 3 is an example of a Bluetooth-only multi-hop network application according to an embodiment of the present invention. The present figure is used to emphasize that the invention is not restricted to provisioning of link-layer resource reservation for single-hop connections only. The data flow in this example is an IP data flow that spans several Bluetooth connections 44,46 inside the Bluetooth domain e.g. from Personal Area Network User devices (PANU, PAN-user role within the Bluetooth PAN profile) 30 via the Group Node 38 (GN, a role within the Bluetooth PAN profile) to the PANU 34. Subsequently BNEP traffic destined for each other (and thus IP traffic) is forwarded by the GN 38 device. If they establish an IP based connection that requires specific QoS parameters, dedicated L2CAP 46,44 channels need to be established both between the source PANU 30 and GN 38 and between the GN 38 and destination PANU 34. To emphasize that the connections between the GN 38 and PANUs 30,34 comprise multiple L2CAP connections, the connections are indicated with two 44 and three 46 pairs of arrows between the PANUs 3034 and the GN 38.

Figure 4 is an example of a communication between a host in a network and a piconet user via a network access point. Figure 4 only contains two devices, the PANU 30 and the Network Access Point (NAP) 36 connected to a network 50. The network can be e.g. a Local Area Network (LAN) as or can be e.g. the internet. It may be assumed that the network transfers data according to the internet protocol (IP). The method according to the invention can be applied if e.g. the PANU 30 wants to transmit an IP flow with predetermined QoS to the network 50, or if the NAP 36 detects a data flow in the network 50 for said PANU 30. To indicate the use of more than one L2CAP channel for the transmission of data between the NAP 36 and the PANU 30 the connection 46 between the two devices is indicated by three pairs of arrows. It may be noted that the three pairs of arrows can be interpreted as e.g. one pair of arrows for the BNEP connection, for the transmission of the control packets and the transmission of other data, and the remaining two pairs for the transmission of two IP data flows from the NAP 36 to the PANU 30 and vice versa. The both pairs of arrows may indicate two IP flows from or to network, and may also indicate a single IP data flow having huge amount of data divided in two L2CAP data channels.

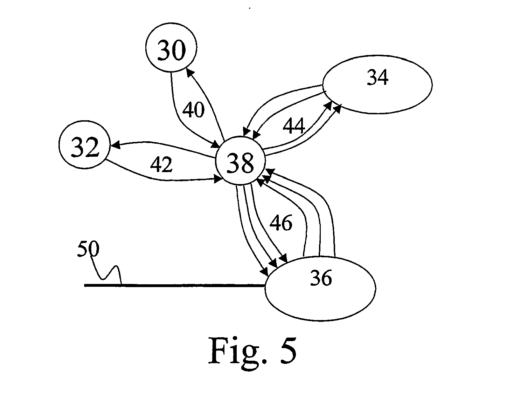

Figure 5 depicts a situation of a multi-hop Bluetooth connection to an internet host via a network access point. Figure 5 is substantially a combination of the Figures 3 and 4, wherein the IP data flow spans several Bluetooth connections 44,46 e.g. from the PANU 34 to the network access point (NAP) 36 via the GN 38 and extends outside of the Bluetooth domain e.g. to the network 50. An example of the former scenario are multiple PANU devices 34,36 that are connected to a GN 38 device. Subsequently BNEP traffic destined for each other (and thus IP traffic) is forwarded by the GN 38 device. If they establish an IP connection that requires specific QoS parameters, dedicated L2CAP 46,44 channels need to be established both between the source PANU 36 and GN 38 and between the GN 38 and destination PANU 34. An example of the latter scenario is e.g. a PANU 36 device that connects to an IP host in the internet through a dedicated Network Access Point (NAP) 36 connected to a Local Area Network 50 (LAN), or through a mobile phone connected e.g. to a UMTS network. In Fig. 3, the GN 38 is in the master role of the piconet and the PANUs 30,32,34,36 are in the slave role, wherein PANU 36 is simultaneously operating as the NAP 36. The roles may be distributed in another way e.g. the NAP 36 can be the Master of the GN 38 which is in turn master to the PANUs 30,32,34. It may be noted that this example is only illustrative and not restricted to the depicted piconet topography.

The source IP hosts and the destination IP hosts of the IP flow could identify that a packet belongs to a specific flow without including an identifier in IP packets, when passing on the packet to the BNEP layer, and the BNEP implementation could still send the packet over the correct L2CAP channel. This applies only when the end-to-end IP connection maps to a single Bluetooth connection (e.g. between NAP 36 and GN 38). If this is not the case, it is essential that an identifier is included in the packet, so that the return traffic can also be mapped to the corresponding L2CAP connection. Optionally, the source of an IP packet belonging to such a flow could identify the packet by inserting a flow label in a BNEP extension header of specific type. This has the advantage that forwarding Bluetooth devices do not have to look in higher layer protocol packet headers.

The presented method could be used in conjunction with IP-based resource reservation protocols. For example, the Resource Reservation Protocol (RSVP) could be used to trigger the link resource reservation. On the other hand, the presented invention could also be used with traffic classification or prioritization schemes, by reserving the necessary resources at link layer in order to meet the QoS parameters defined for the traffic class. This could be a formal (standardized) definition, or an application/device-specific mapping of QoS parameters to a priority level at a level higher than Bluetooth, which is subsequently mapped to a set link QoS parameters. In either way the link reservation can help to achieve (a 'minimum') performance expected for the traffic class/priority level or to help differentiating higher priority traffic flows from other flows (with lower priority). The link-layer resource reservation can also be used to transport multiple flows belonging to the same class/priority.

Multi-hop resource reservation could be achieved by hop-by-hop initiation of the reservation (and subsequently establishment of a dedicated L2CAP connection), e.g. by using RSVP. The presented invention could also be enhanced by providing multi-hop resource reservation at the BNEP level. When the destination address of the flow indicated in the BNEP signaling packet is not the address of the recipient of the packet (i.e. the packet is received by an intermediate node that will take care of forwarding traffic between source and destination), and the intermediate node has knowledge of the path towards the destination, this intermediate node can establish a dedicated L2CAP channel with destination (or the next hop in case there are multiple forwarders in the path) in addition to the L2CAP channel that will be established with the source. Both L2CAP channels can be configured with the same QoS parameters to provide end-to-end QoS within the multi-hop path (within the Bluetooth domain). Such forwarding device could be the GN 38 in one of the preceding examples. The nature of BNEP is such that it hides the Bluetooth topology from the link layer, therefore justifying the approach to hide the link layer QoS resource reservation from the IP layer of forwarding nodes.

It is to be noted that the implementation of the inventive method is Operating System-dependent. The API (Application Protocol Interface) between the IP layer and BNEP layer should include a mechanism to initiate/indicate link layer resource reservation and/or packet classification/priority. The L2CAP API should include a mechanism to configure a L2CAP channel with QoS parameters.

It is to be noted that the expression "data flow" is to describe any data signal comprising more than one data packet, and requiring a predetermined quality of service.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

### Abbreviations

- 3GPP: 3^{rd} Generation Partnership Project
- API: (Application Protocol Interface
- BNEP: Bluetooth Network Encapsulation Protocol
- Diffserv: Differentiated Services
- GN: Group Node, role within the Bluetooth PAN profile
- IMS: Internet Multimedia Subsystem
- Intserv: Integrated Services
- IP: Internet Protocol
- L2CAP: Logical Link Control and Adaptation Protocol
- MT: Mobile Terminal
- NAP: Network Access Point, role within the Bluetooth PAN profile
- PAN: Personal Area Networking
- PANU: PAN User, role within the Bluetooth PAN profile
- PDA: Personal Data assistant
- PSM: Protocol/Service Multiplexer
- QoS: Quality of Service
- RSVP: Resource Reservation Protocol
- TE: Terminal Equipment
- UMTS: Universal Mobile Telecommunication System

## Claims

1. Method for transferring at least one data flow in addition to other data flows between two Bluetooth devices (2, 4, 30, 34, 36, 38) connected via a Bluetooth network encapsulation protocol (BNEP) data connection, comprising:
- detecting at least one data flow to be transferred,
**characterized by**
- detecting a quality of service (QoS) requirement of said at least one data flow, and
- establishing at least one logical channel (L2CAP) (18, 19, 44, 46) dedicated for said data flow, said logical channel (18, 19, 44, 46) providing a logical link control and adaptation protocol, wherein said channel is meeting at least said detected quality of service (QoS) requirement.

2. Method according to claim 1, wherein the control signaling for said establishing of said logical channel and for the operation of said logical channel is transferred via said Bluetooth network encapsulation protocol (BNEP) data connection.

3. Method according to claim 2, wherein said control signaling further includes identifying of said data flow.

4. Method according to claim 2 or 3, wherein said control signaling includes the transfer of quality of service parameters according to said quality of service requirements.

5. Method according to anyone of the preceding claims, further comprising evaluating said detected quality of service requirement.

6. Method according to anyone of the preceding claims, wherein said step of establishing of said L2CAP channel includes negotiating said quality of service requirement between said two devices.

7. Method according to claim 6, wherein said negotiating of said service requirement between said devices is executed by mapping said identifiers of said data flow to said specific L2CAP channel.

8. Method according to anyone of the preceding claims, further comprising transferring said data flow via said dedicated L2CAP channel.

9. Method according to anyone of the preceding claims, wherein said data flow is an internet protocol (IP) based data flow.

10. Method according to claim 9, wherein data packets of said internet based data flow are mapped to said L2CAP channel based on the identifiers of said data packets.

11. Method according to anyone of the preceding claims, wherein said quality of service requirement is selected from a group comprising specific latency, reservation, delay, error rate, data rate, priority, and bandwidth.

12. Method according to anyone of the preceding claims, wherein said data flow is transferred via more than one Bluetooth connection.

13. Computer program for executing the method for transferring data flows in a wireless network, comprising program code means for carrying out the steps of anyone of claims 1 to 12, when said program is run on a computer or a network device.

14. Computer program product comprising program code means stored on a computer readable medium for carrying out the method of anyone of claims 1 to 12, when said program product is run on a computer or network device.

15. Device (2, 4, 30, 34, 36, 38) for transferring at least one data flow via a Bluetooth network encapsulation protocol (BNEP) data connection, comprising:
- a component for detecting at least one data flow to be transferred,
**characterized by**
- a component for detecting a quality of service (QoS) requirement of said at least one data flow, and
- a component for establishing at least one logical (L2CAP) channel (18, 19) dedicated for said data flow, said channel providing a logical link control and adaptation protocol, wherein said channel is meeting at least said detected quality of service (QoS) requirement.

## Patentansprüche

1. Verfahren zum Übertragen von mindestens einem Datenfluss zusätzlich zu anderen Datenflüssen zwischen zwei Bluetooth -Vorrichtungen (2, 4, 30, 34, 36, 38), die über eine Datenverbindung mit einem Bluetooth-Netz-Verkapselungs-Protokoll (BNEP) verbunden sind, umfassed:
- Ermitteln von mindestens einem Datenfluss, der zu übertragen ist,
**gekennzeichnet durch**
- Ermitteln eines Dienstgüten (QoS)-Erfordernisses des mindestens einem Datenflusses, und
- Aufbauen von mindestens einem logischen Kanal (L2CAP) (18, 19, 44, 46), der für den Datenfluss reserviert ist, wobei der logische Kanal (18, 19, 44, 46) ein Logisches-Link-Steuerungs-und-Adaptations-Protokoll bereitstellt, worin der Kanal zumindest das ermittelte Dienstgüte (QoS)-Erfordernis erfüllt.

2. Verfahren gemäß Anspruch 1, wobei die Steuerungssignalisierung für das Aufbauen des logischen Kanals und für den Betrieb des logischen Kanals über die Datenverbindung mit einem Bluetooth-Netz-Verkapselungs-Protokoll (BNEP) übertragen wird.

3. Verfahren gemäß Anspruch 2, wobei die Steuerungssignalisierung weiter eine Identifizierung des Datenflusses einschließt.

4. Verfahren gemäß Anspruch 2 oder 3, wobei die Steuerungssignalisierung den Übertrag eines Dienstgüte-Parameters gemäß dem Dienstgüte-Erfordernis einschließt.

5. Verfahren gemäß einem der vorangegangenen Ansprüche, das weiter ein Bewerten des ermittelten Dienstgüte-Erfordernisses umfasst.

6. Verfahren gemäß einem der vorangegangenen Ansprüche, wobei der Schritt des Aufbauens des L2CAP-Kanals ein Aushandeln des Dienstgüte-Erfordernisses den zwischen zwei Vorrichtungen einschließt.

7. Verfahren gemäß Anspruch 6, wobei das Aushandeln des Diensterfordernisses zwischen den Vorrichtungen durch Abbilden des Bezeichners des Datenflusses auf den spezifischen L2CAP-Kanal ausgeführt wird.

8. Verfahren gemäß einem der vorangegangenen Ansprüche, weiter umfassend Übertragen des Datenflusses über den geeigneten L2CAP-Kanal umfasst.

9. Verfahren gemäß einem der vorangegangenen Ansprüche, wobei der Datenfluss ein Internet-Protokoll (IP) basierter Datenfluss ist.

10. Verfahren gemäß Anspruch 9, wobei Datenpakete des Internet basierten Datenflusses, auf Grundlage der Bezeichner der Datenpakete auf den L2CAP-Kanal abgebildet werden.

11. Verfahren gemäß einem der vorangegangenen Ansprüche, wobei das Dienstgüte-Erfordernis von einer Gruppe ausgewählt wird, die spezifische Verzögerungszeit, Reservierung, Verzögerung, Fehlerrate, Datenrate, Priorität und Bandbreite umfasst.

12. Verfahren gemäß einem der vorangegangenen Ansprüche, wobei der Datenfluss über mehr als eine Bluetooth- Verbindung übertragen wird.

13. Computerprogramm, um das Verfahren zur Übertragung von Datenflüssen in einem kabellosen Netz auszuführen, umfassend Programmcodemittel, um irgendeinem der Schritte der Ansprüche 1 bis 12 durchzuführen, wenn das Programm auf einem Computer oder einer Netzwerkvorrichtung ausgeführt wird.

14. Computerprogramm-Produkt umfassend Programmcodemittel, die auf einem computerlesbaren Medium gespeichert sind, um das Verfahren von irgendeinem der Ansprüche 1 bis 12 durchzuführen, wenn das Programmprodukt auf einem Computer oder einer Netzwerkvorrichtung ausgeführt wird.

15. Vorrichtung (2, 4, 30, 34, 36, 38), um mindestens einen Datenfluss über eine Datenverbindung mit einem Bluetooth-Netz-Verkapselungs-Protokoll (BNEP) zu übertragen, umfassend:
- eine Komponente zum Ermitteln von mindestens einem Datenfluss, der zu übertragen ist,
**gekennzeichnet, durch**
- eine Komponente zum Ermitteln eines Dienstgüten (QoS)-Erfordernisses des mindestens einem Datenfluss, und
- eine Komponente zum Aufbauen von mindestens einem logischen Kanal (L2CAP) (18, 19), der für den Datenfluss reserviert ist, wobei der Kanal ein Logisches-Link-Steuerungs-und-Adaptations-Protokoll bereitstellt, worin der Kanal zumindest das ermittelte Dienstgüte (QoS)-Erfordernis erfüllt.

## Revendications

1. Procédé destiné à transférer au moins un flux de données en plus d'autres flux de données entre deux dispositifs Bluetooth (2, 4, 30, 34, 36, 38) connectés via une connexion de données au protocole d'encapsulation réseau de Bluetooth (BNEP), comprenant l'étape consistant à :
- détecter au moins un flux de données à transférer,
**caractérisé par** les étapes consistant à :
- détecter une exigence de qualité de service (QoS) dudit au moins un flux de données, et
- établir au moins un canal logique (L2CAP) (18, 19, 44, 46) dédié audit flux de données, ledit canal logique (18, 19, 44, 46) fournissant un contrôle de liaison logique et un protocole d'adaptation, dans lequel ledit canal satisfait au moins ladite exigence de qualité de service (QoS) détectée.

2. Procédé selon la revendication 1, dans lequel la signalisation de contrôle pour ledit établissement dudit canal logique et pour le fonctionnement dudit canal logique est transférée via ladite connexion de données au protocole d'encapsulation réseau de Bluetooth (BNEP).

3. Procédé selon la revendication 2, dans lequel ladite signalisation de contrôle inclut en outre l'identification dudit flux de données.

4. Procédé selon la revendication 2 ou 3, dans lequel ladite signalisation de contrôle inclut le transfert des paramètres de la qualité de service conformément à ladite exigence de qualité de service.

5. Procédé selon l'une quelconque des revendications précédentes, comprenant en outre l'évaluation de ladite exigence de qualité de service détectée.

6. Procédé selon l'une quelconque des revendications précédentes, dans lequel ladite étape d'établissement dudit canal L2CAP inclut la négociation de ladite exigence de qualité de service entre lesdits deux dispositifs.

7. Procédé selon la revendication 6, dans lequel ladite négociation de ladite exigence de service entre lesdits dispositifs est exécutée en mettant en correspondance lesdits identificateurs dudit flux de données avec ledit canal L2CAP spécifique.

8. Procédé selon l'une quelconque des revendications précédentes, comprenant en outre le transfert dudit flux de données via ledit canal L2CAP dédié.

9. Procédé selon l'une quelconque des revendications précédentes, dans lequel ledit flux de données est un flux de données basé sur un protocole internet (IP).

10. Procédé selon la revendication 9, dans lequel les paquets de données dudit flux de données basé sur Internet sont mis en correspondance avec ledit canal L2CAP en se basant sur les identificateurs desdits paquets de données.

11. Procédé selon l'une quelconque des revendications précédentes, dans lequel ladite exigence de qualité de service est sélectionnée dans un groupe comprenant une latence, une réservation, un retard, un taux d'erreur, un débit de données, une priorité et une bande passante spécifiques.

12. Procédé selon l'une quelconque des revendications précédentes, dans lequel ledit flux de données est transféré via plus d'une connexion Bluetooth.

13. Programme informatique pour exécuter le procédé pour transférer les flux de données dans un réseau sans fil, comprenant un moyen de code de programme pour effectuer les étapes de l'une quelconque des revendications 1 à 12, quand ledit programme est exécuté sur un ordinateur ou un dispositif en réseau.

14. Produit de programme informatique comprenant un moyen de code de programme stocké sur un support lisible par un ordinateur pour effectuer le procédé de l'une quelconque des revendications 1 à 12 lorsque ledit produit de programme est exécuté sur un ordinateur ou un dispositif en réseau.

15. Dispositif (2, 4, 30, 34, 36, 38) pour transférer au moins un flux de données via une connexion de données au protocole d'encapsulation réseau de Bluetooth (BNEP), comprenant :
- un composant pour détecter au moins un flux de données à transférer,
**caractérisé par**
- un composant pour détecter une exigence de qualité de service (QoS) dudit au moins un flux de données, et
- un composant pour établir au moins un canal logique (L2CAP) (18, 19) dédié audit flux de données, ledit canal fournissant un contrôle de liaison logique et un protocole d'adaptation, dans lequel ledit canal satisfait au moins ladite exigence de qualité de service (QoS) détectée.
